# EUROPEAN PATENT SPECIFICATION

(11) **EP 2 646 665 B1**
(45) Date of publication and mention of the grant of the patent: **03.02.2016**
(21) Application number: 11844274.8
(22) Date of filing: 29.11.2011
(51) Int. Cl.: F01N 3/20

(54) **REDUCING AGENT STORAGE SYSTEM WITH WARMING DEVICE AND METHOD FOR WARMING OF REDUCING AGENT**
REDUKTIONSMITTELSPEICHERSYSTEM MIT WÄRMENDER VORRICHTUNG UND VERFAHREN ZUM ERWÄRMEN EINES REDUKTIONSMITTELS
SYSTÈME DE STOCKAGE D'AGENT RÉDUCTEUR ÉQUIPÉ D'UN DISPOSITIF DE RÉCHAUFFAGE ET PROCÉDÉ DE RÉCHAUFFAGE D'AGENT RÉDUCTEUR

(30) Priority: 02.12.2010 SE 1051272
(43) Date of publication of application: 09.10.2013
(73) Proprietor: Scania CV AB, 151 87 Södertälje (SE)
(72) Inventor: KARLSSON, Pär, S-611 65 Nyköping (SE); LEPPÄNEN, Marko, S-144 40 Rönninge (SE); NÄSMAN, Erik, S-146 37 Tullinge (SE); GILBERT, Steig, Sandton (ZA)
(74) Representative: Scania CV AB
(86) International application number: PCT/SE2011/051438
(87) International publication number: WO 2012/074467

(56) References cited:
- EP-A1- 1 925 354
- WO-A1-2008/040592
- WO-A1-2008/105721
- WO-A2-2010/119116
- WO-A2-2010/119116
- DE-A1-102008 001 948
- DE-A1-102009 011 018
- DE-A1-102009 011 018
- US-A1- 2007 075 467
- US-A1- 2007 180 816
- US-A1- 2007 180 816
- US-A1- 2008 092 531
- US-A1- 2008 092 531
- US-A1- 2009 230 136
- US-A1- 2009 230 136
- US-A1- 2010 220 984

## Description

### FIELD OF THE INVENTION

The invention relates to a reducing agent storage system with a warming device for reducing agent for a vehicle according to the preamble of claim 1 and a method for warming of reducing agent in a reducing agent storage system for a vehicle according to the preamble of claim-10.

### BACKGROUND TO THE INVENTION AND PRIOR ART

In diesel vehicles, particularly in heavy vehicles such as heavy trucks, the SCR method, i.e. a method for selective reduction of nitrogen oxides, is used to clean the vehicle's exhaust gases so that those released into the surroundings do not have high contents of nitrogen oxides.

In the SCR method, a liquid urea solution injected into the exhaust pipe may be used as NOₓ reducing agent.

Using liquid urea solution as NOₓ reducing agent may cause problems at low temperatures in that liquid urea freezes at about -11°C, which may lead to the reducing agent in the reducing agent tank freezing, which is solved by warming the reducing agent in the reducing agent tank.

DE 10 2008 001 948 A1 refers to a system with a venturi pump which is placed in liquid reducing agent.

US 2009/0230136 A1 refers to a reducing agent storage system with a wanning element.

US 2007/0180816 A1 refers to a device for cleaning of exhaust gases.

WO 2008/138960 refers to a urea tank with an integrated electric wanning element.

### SUMMARY OF THE INVENTION

The object of the present invention is to propose a reducing agent storage system with a warming device for reducing agent for a vehicle and a method for warming of reducing agent in a reducing agent storage system for a vehicle, whereby freezing of the reducing agent in the reducing agent storage system is prevented during operation by the warning device even when the outside temperature is low.

The above object is achieved according to the invention by a reducing agent storage system with a warming device according to the characterising part of claim 1 and a method for warming of reducing agent according to the characterising part of claim 10. The fact that a reducing agent storage system with a warming device and further comprising a reducing agent tank, a tapping container intended for reducing agent and situated within the reducing agent tank and a feed device for reducing agent comprising a venturi pump according to the characterising part of claim 1 presents the characteristics that the warming device is a heating loop in which liquid heat medium warmed by the vehicle's engine circulates and that the heating loop is adapted to running within at least the lower portion of the tapping container and within at least the lower portion of the reducing agent tank and is also associated thermally with the venturi pump, making it possible for heat to be transferred from the liquid heat medium to the reducing agent in the reducing agent tank, the tapping container and the venturi pump, and the fact that a method for warming of reducing agent according to the characterising part of claim 10 presents the characteristics that liquid heat medium which has been warmed by the vehicle's engine is circulated in the warming device, which is a heating loop associated thermally with the venturi pump and adapted to running within at least the lower portion of the tapping container and within at least the lower portion of the reducing agent tank, making it possible for heat to be transferred from the liquid heat medium to the reducing agent in the reducing agent tank, the tapping container and the venturi pump, afford the advantage that freezing of the reducing agent can be prevented by utilising waste heat from the vehicle's engine.

According to a further embodiment of the invention, the heating loop for the liquid heat medium is associated thermally with parts of at least one from among the tapping container, the return device and the supply device for reducing agent, thereby achieving the advantage of further warming of the reducing agent.

According to a further embodiment of the invention, the heating loop for liquid heat medium is associated thermally with more than one side of the venturi pump, thereby achieving the advantage of further warming of the reducing agent in the venturi pump.

According to a further embodiment of the invention, the liquid heat medium is either warmed directly by the engine through itself being the engine's cooling water or is warmed indirectly by the engine through being warmed by the engine, thereby affording the possibility of adapting the reducing agent storage system according to the engine's configuration.

According to further embodiments of the invention, the venturi pump is situated in a cover for reducing agent tank, and the penetrations in the reducing agent tank for the tapping device, the return device, the feed device and the heating loop are situated in one or more covers placed on the reducing agent tank, and the tapping device, the return device and the supply device for reducing agent take the form of pipes or hoses, affording the advantage of simple construction and fitting and avoiding leakage at the tank penetrations.

According to a further embodiment of the invention, the tapping container is provided with a liquid-tight bottom, has a liquid-tight sidewall surface extending upwards from the bottom and is provided with at least one level limiting device for reducing agent, affording the advantage that air ingress into the tapping device is avoided while at the same time there is no need for a control unit to control filling of the tapping device.

### BRIEF LIST OF DRAWINGS

The invention is explained below in more detail with reference to the attached drawings, in which:
Fig. 1 depicts schematically a reducing agent storage system for a vehicle according to a first embodiment of the invention,
Fig. 2 depicts schematically a warmed venturi pump for a reducing agent storage system for a vehicle according to a second embodiment of the invention as viewed from above,
Fig. 3 depicts schematically a warmed venturi pump for a reducing agent storage system for a vehicle according to a third embodiment of the invention as viewed from above, and
Fig. 4 is a schematic flowchart of a method according to an embodiment of the invention.

### DESCRIPTION OF PREFERRED EMBODIMENTS OF THE INVENTION

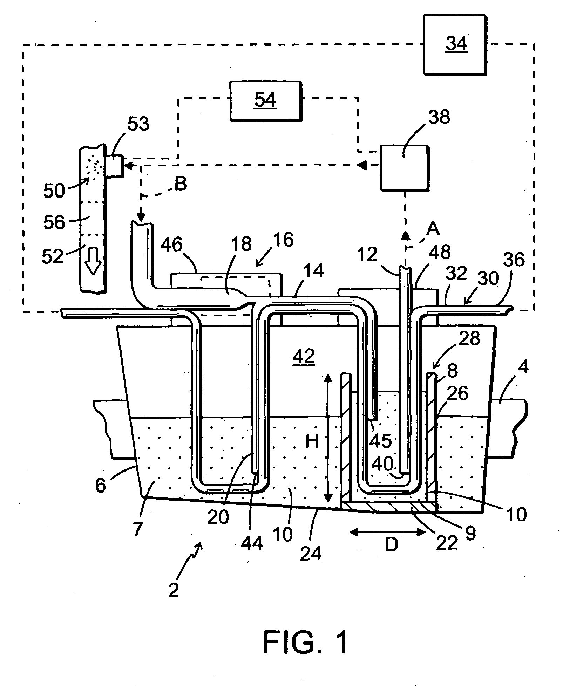

Fig. 1 depicts schematically a reducing agent storage system 2 for a vehicle 4 according to a first embodiment of the invention, which system comprises a reducing agent tank 6, a tapping container 8 for reducing agent 10, also called catch tank, situated within the reducing agent tank 6, a tapping device 12 for reducing agent 10 which is connected to the tapping container 8 and through which reducing agent is drawn out in the direction of the arrow A, a return device 14 for reducing agent 10 which is connected to the tapping container 8 and by which reducing agent 10 which is drawn out by the tapping device 12 but is not supplied to the exhaust flow of the vehicle 4 is led back, in the direction of the arrow B, to the tapping container 8 via the return device 14, and a feed device 16 for reducing agent 10 which is adapted to feeding reducing agent 10 from the reducing agent tank 6 to the return device 14 in order thus to expedite filling of the tapping container 8. The feed device 16 comprises a venturi pump 18 according to a first embodiment of the invention which is connected to the return device 14 and by which the feed device 16 is adapted to feeding reducing agent 10 from the reducing agent tank 6 to the return device 14 through a supply device 20 for reducing agent 10 situated between them by the venturi pump 18 drawing reducing agent 10 from the reducing agent tank 6 by means of the return flow B of reducing agent 10 which is led via the return device 14 to the tapping container 8. As mentioned above, the tapping container 8 is situated within the reducing agent tank 6 and is provided with a liquid-tight bottom 22 which may be integral with the bottom 24 of the reducing agent tank 6, and further has a liquid-tight sidewall surface 26 which extends from the bottom 22, making it possible for reducing agent 10 to be kept in the tapping container 8. The tapping container 8 is further provided with at least one level limiting device 28 for reducing agent 10, e.g. in the form of holes in the sidewall surface 26 or in the form of the tapping container 8 being open upwards, with the result that the tapping container 8 can only be filled up to the level limiting device 28 and any further reducing agent 10 supplied will run down via the level limiting device 28 into the reducing agent tank 6 in which the tapping container 8 is situated.

The reducing agent storage system 2 is further provided with a warming device 30 for reducing agent 10 in the form of a heating loop 32 in which liquid heat medium 36 warmed by the engine 34 of the vehicle 4 circulates. The heating loop 32 is arranged to run within at least the lower portion 9 of the tapping container 8 and within at least the lower portion 7 of the reducing agent tank 6 and is also associated thermally with the venturi pump 18, making it possible for heat to be transferred from the liquid heat medium 36 to the reducing agent 10 in the reducing agent tank 6, the tapping container 8 and the venturi pump 18 in order to prevent freezing of the reducing agent 10 if the liquid heat medium 36 is sufficiently warmed by the engine 34 of the vehicle 4. The heating loop 32 for the liquid heat medium 36 is preferably also associated thermally with parts of at least one from among the tapping device 12, the return device 14 and the supply device 20 for reducing agent 10, making it possible for heat to be transferred from the liquid heat medium 36 to the reducing agent 10 in those parts in order to prevent freezing of the reducing agent 10 if the liquid heat medium 36 is sufficiently warmed by the engine 34 of the vehicle 4.

The liquid heat medium 36 may either be directly warmed by the engine 34 through being the engine's cooling water, or be indirectly warmed by the engine 34 through itself being warmed by the engine 34, e.g. by the engine's cooling water, the motor oil or by the engine's exhaust gases, preferably by heat exchange.

The thermal association is preferably via fixed walls made of, for example, metal, e.g. stainless steel, or plastic material.

A pump 38 adapted to drawing reducing agent 10 from the tapping container 8 via the tapping device 12 is preferably connected to the reducing agent storage system 2.

The object of providing "intermediate storage" of reducing agent 10 in a tapping container 8 is to prevent air from being drawn into the pump 38 if the vehicle slopes so much that an inlet to a tapping device situated in the reducing agent tank might then be above the surface of the reducing agent 10 in the reducing agent tank 6. To further reduce this risk, the inlet 40 provided in the tapping container 8 for the tapping device 12 is preferably situated far down in the tapping container 8 to prevent air 42 instead of reducing agent 10 being drawn into the tapping device 12 and thence into the pump 38. The tapping container 8 also preferably has, compared with the dimensions of the reducing agent tank 6, a slightly larger diameter D of its bottom surface, which is preferably substantially circular or square, than the height H of its liquid-tight sidewall surface 26 which extends upwards from the bottom 22, in order to further reduce the risk that the inlet 40 to the tapping device 12 might at any time be above the surface of the reducing agent 10 then present in the tapping container 8.

The inlet 44 provided in the reducing agent tank 6 for the supply device 20 is preferably situated far down in the reducing agent tank 6 to prevent air 42 instead of reducing agent 10 being drawn into the supply device 20, which would lead to the tapping container 8 not being filled as quickly as when only reducing agent 10 is drawn into the supply device 20, but in certain cases when the vehicle slopes greatly air might be drawn into the inlet 44 for the supply device 20, which would not be a problem so long as the outlet 45 of the return device 14 in the tapping container 8 is so arranged that any air bubbles from the return device 14 are led into the inlet 40 of the tapping device 12, which might for example be achieved by the outlet 45 for the return device 14 being high up in the tapping container 8 so that air bubbles would not make their way down to the inlet 40 of the tapping device 12. Air reaching the pump 38 might lead to lower torque of the engine 34 of the vehicle 4.

The tapping device 12, the return device 14 and the supply device 20 for reducing agent 10 take preferably the form of pipes or hoses.

To simplify the configuration, the penetrations in the reducing agent tank 6 for the tapping device 12, the return device 14, the supply device 20 and the heating loop 32 are preferably situated in or more covers 46, 48 placed on the reducing agent tank 6. The venturi pump 18 may also preferably be situated in the cover 46 where the penetration for the supply device 20 is located.

As mentioned above, a pump 38 is provided to draw reducing agent 10 from the tapping container 8 via the tapping device 12 which is preferably connected to the reducing agent storage system 2. The reducing agent 10 drawn from the tapping container 8 which is not returned to it via the return device 14 will be supplied to the exhaust gases 50 in the exhaust pipe 52 of the vehicle 4 by a supply device 53 connected to the reducing agent storage system 2, which liquid reducing agent 10 is intended to reduce nitrogen oxides present in the exhaust gases 50. The reducing agent 10 is preferably also used for cooling the supply device 53. Nitrogen oxides in the exhaust gases 50 of the vehicle 4 will thus be reduced by supplying liquid reducing agent 10 to the exhaust gases 50 in an exhaust pipe 52.

The liquid reducing agent 10 is an NOₓ reducing agent, e.g. a liquid NOₓ reducing agent such as a liquid urea solution, e.g. the additive marketed under the trade name "Ad Blue", which contains 32.5 wt% of urea in distilled/deionised water.

When a liquid urea solution is added in the exhaust pipe 52 to the exhaust gases at temperatures over 180°C, the water boils away, followed by the urea melting and becoming vaporised by so-called thermolysis. At this stage, ammonia inter alia is formed by the reaction (NH2)2CO => NH3 + HNCO.

The thermolysis of the urea is followed by hydrolysis in a downstream catalyst or at a temperature over 400°C according to the reaction HNCO + H2O => NH3 + CO2.

NH3 reduces NOₓ according to the reaction NH3 + NOₓ => N2 + H2O (unbalanced formula in that X may have different values).

At least one control unit 54 is preferably provided to control the pump 38 and the supply of the liquid reducing agent 10 on the basis of the amount of reducing agent used and the temperature of the exhaust gases 50 in the exhaust line 52, so that the pump 38 runs only when necessary. If the exhaust gases 50 are very cold, e.g. just after a cold start when outside temperatures are very low, the reducing agent 10 cannot become vaporised, so the control unit 54 will block the supply of liquid reducing agent 10 in the exhaust pipe 52 but will ensure that reducing agent 10 is supplied to the exhaust gases 50 if the exhaust temperature is high enough for it to become vaporised in the exhaust pipe. This temperature range may be set by the control unit 54 depending on the particular reducing agent used, the temperature of the liquid reducing agent at the moment of supply, the dimensions of the exhaust pipe, the velocity of the exhaust flow, etc. During operation, the exhaust gases may normally be at a temperature of between about 200°C and about 700°C.

It is also possible to supply liquid reducing agent to the exhaust gases without using a control unit, although deposits would then form on the inside surface of the exhaust pipe and would subsequently burn away when the temperature rises. Deposits lead to pressure drops in the exhaust system, so a device with no control unit is not advisable, particularly on long journeys at low load and uniform speed, e.g. when driving an unladen vehicle combination in level terrain, a situation in which the exhaust temperature will remain low for long periods.

A catalyst 56 is preferably provided in the exhaust pipe 52 downstream of the supply device 54 for the liquid reducing agent 10, to ensure that not only hydrolysis but also thermolysis of urea takes place as above. It is also possible to supply the liquid reducing agent to the exhaust gases without using a catalyst, although this is not to be recommended since it might lead to periodic build-up of deposits.

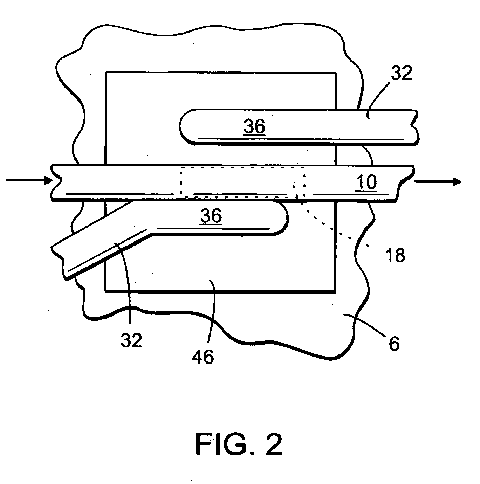

Fig. 2 depicts schematically a warmed venturi pump 18 for a reducing agent storage system 2 according to a second embodiment of the invention as viewed from above, in which the venturi pump 18 is situated in a cover 46 for the reducing agent tank 6, and the heating loop 32 for liquid heat medium 36 is associated thermally with one side of the venturi pump 18, making it possible for heat to be transferred from the liquid heat medium 36 to the reducing agent 10 in the venturi pump 18 and thereby preventing freezing of the reducing agent 10 in the venturi pump 18 if the liquid heat medium 36 is sufficiently warmed by the vehicle's engine. During operation, heat exchange thus takes place between the warmer heating loop 32 for liquid heat medium 36 and the colder venturi pump 18 for reducing agent 10

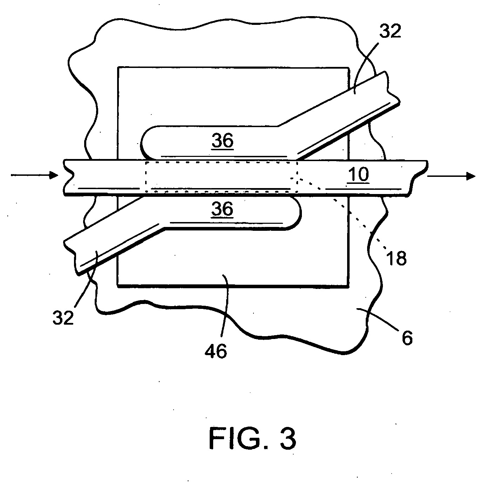

Fig. 3 depicts schematically a warmed venturi pump 18 for a reducing agent storage system 2 for a vehicle 4 according to a third embodiment of the invention as viewed from above, in which the venturi pump 18 is situated in a cover 46 for the reducing agent tank 6, and the heating loop 32 for the liquid heat medium 36 is associated thermally with two sides of the venturi pump 18, making it possible for heat to be transferred from the liquid heat medium 36 to the reducing agent 10 in the venturi pump 18 and thereby preventing freezing of the reducing agent 10 in the venturi pump 18 if the liquid heat medium 36 is sufficiently warmed by the vehicle's engine. During operation, heat exchange thus takes place between the warmer heating loop 32 for liquid heat medium 36 and the colder venturi pump 18 for reducing agent 10.

In the embodiments described with reference to Figures 2 and 3 above, the heating loop 32 for liquid heat medium 36 was described as being associated thermally with one or two sides of the venturi pump 18, but might alternatively be associated thermally with more than two sides of the venturi pump 18, i.e. be associated thermally with at least one side of the venturi pump 18.

During operation, the liquid heat medium is preferably kept warm enough by the heating loop 32 not to freeze, which in the case of "Ad Blue" would occur at about -11°C.

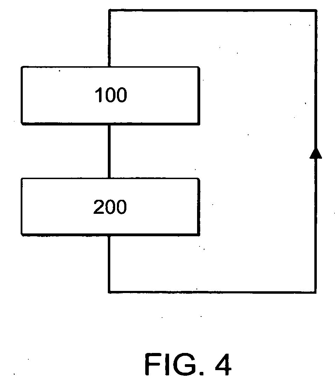

Figure 4 refers to an example of a method for warming of reducing agent 10 in a reducing agent storage system 2 for a vehicle 4.

Fig. 4 is a schematic flowchart of a method for warming of reducing agent 10 according to an embodiment of the invention, using the same reference notations 2-18, 30-36 and B as in Figures 1-3. The method for warming of reducing agent 10 in a reducing agent storage system 2 for a vehicle 4, which system comprises a reducing agent tank 6, a tapping container 8 intended for reducing agent 10 and situated within the reducing agent tank 6, a tapping device 12 for reducing agent 10 connected to the tapping container 8, a return device 14 for reducing agent 10 connected to the tapping container 8, and a feed device 16 for reducing agent 10 which has a venturi pump 18 connected to it, which reducing agent storage system 2 is further provided with a warming device 30 for reducing agent 10, comprises the steps of - 100 feeding reducing agent 10 by means of the feed device 16 from the reducing agent tank 6 to the return device 14 through a supply device 20 situated between them for reducing agent 10 by the venturi pump 18 drawing reducing agent 10 from the reducing agent tank 6 by means of the return flow B of reducing agent 10 which is led via the return device 14 to the tapping container 8 to expedite filling of the tapping container, and - 200 circulating in the warming device 30, which is a heating loop 32 associated thermally with the venturi pump 18 and adapted to running within at least the lower portion 9 of the tapping container 8 and within at least the lower portion 7 of the reducing agent tank 6, liquid heat medium 36 which is warmed by the engine 34 of the vehicle 4, making it possible for heat to be transferred from the liquid heat medium 36 to the reducing agent 10 in the reducing agent tank 6, the tapping container 8 and the venturi pump 18 in order to prevent freezing of the reducing agent 10.

The invention is in no way restricted to the embodiments described but may be varied freely within the scopes of the claims. Parts from the various embodiments might be combined. In the above embodiments, the venturi pump 18 is referred to as being situated in a cover but might also be situated on or in the reducing agent tank 6.

## Claims

1. A reducing agent storage system (2) for a vehicle (4), which system comprises a reducing agent tank (6), a tapping container (8) intended for reducing agent and situated within the reducing agent tank (6), a tapping device (12) for reducing agent (10) connected to the tapping container (8), a return device (14) for reducing agent (10) connected to the tapping container (8), and a feed device (16) for reducing agent (10) which comprises a venturi pump (18) connected to the return device (14), which reducing agent storage system (2) is further provided with a warming device (30) for reducing agent (10), whereby the feed device (16) is adapted to feeding reducing agent (10) from the reducing agent tank (6) to the return device (14) through a supply device (20) situated between them for reducing agent (10) by the venturi pump (18) drawing reducing agent (10) from the reducing agent tank (6) by means of the return flow (B) of reducing agent (10) which is led via the return device (14) to the tapping container (8), and that the warming device (30) is a heating loop (32) in which liquid heat medium (36) warmed by the engine (34) of the vehicle (4) circulates, which heating loop (32) is adapted to running within the lower portion (7) of the reducing agent tank (6) **characterised in that** the heating loop (32) is adapted to running within the lower portion (9) of the tapping container (8) and is also associated thermally with the venturi pump (18), making it possible for heat to be transferred from the liquid heat medium (36) to the reducing agent (10) in the reducing agent tank (6), the tapping container (8) and the venturi pump (18) in order to prevent freezing of the reducing agent (10) and **in that** the heating loop (32) for the liquid heat medium (36) is further associated thermally with parts of the tapping device (12), the return device (14) and the supply device (20) for reducing agent (10) making it possible for heat to be transferred from the liquid heat medium (36) to the reducing agent (10) in those parts in order to prevent freezing of the reducing agent (10).

2. A reducing agent storage system (2) according to claim 1, **characterised in that** the heating loop (32) for liquid heat medium (36) is associated thermally with more than one side of the venturi pump (18).

3. A reducing agent storage system (2) according to any one of the foregoing claims, **characterised in that** the liquid heat medium (36) is either directly warmed by the engine (34) through being the engine's cooling water, or is indirectly warmed by the engine (34) through itself the liquid heat medium (36) being warmed by the engine (34).

4. A reducing agent storage system (2) according to any one of the foregoing claims, **characterised in that** the venturi pump (18) is situated in a cover (46) for the reducing agent tank (6).

5. A reducing agent storage system (2) according to any one of the foregoing claims, **characterised in that** the penetrations in the reducing agent tank (6) for the tapping device (12), the return device (14), the supply device (20) and the heating loop (32) are situated in one or more covers (46, 48) provided on the reducing agent tank (6).

6. A reducing agent storage system (2) according to any one of the foregoing claims, **characterised in that** the tapping device (12), the return device (14) and the supply device (20) for reducing agent (10) take the form of pipes or hoses.

7. A reducing agent storage system (2) according to any one of the foregoing claims, **characterised in that** the tapping container (8) is provided with a liquid-tight bottom (22), has a liquid-tight sidewall surface (26) extending upwards from the bottom (22) and is provided with at least one level limiting device (28) for reducing agent (10), whereby the tapping container (8) can be filled up to the level limiting device (28) but any further reducing agent (10) supplied will run down via the level limiting device (28) into the reducing agent tank (6) in which the tapping container (8) is situated.

8. A reducing agent storage system (2) according to any one of the foregoing claims, **characterised in that** the reducing agent (10) is a urea solution.

## Patentansprüche

1. Reduktionsmittelspeichersystem (2) für ein Fahrzeug (4), wobei das System umfasst: einen Reduktionsmitteltank (6), einen Zapfbehälter (8), welcher für Reduktionsmittel bestimmt und in dem Reduktionsmitteltank (6) angeordnet ist, eine Zapfvorrichtung (12) für Reduktionsmittel (10), welche an den Zapfbehälter (8) angeschlossen ist, eine Rückführvorrichtung (14) für Reduktionsmittel (10), welche an den Zapfbehälter (8) angeschlossen ist, eine Zuführvorrichtung (16) für Reduktionsmittel (10), welche eine Venturi-Pumpe (18) umfasst, die an die Rückführvorrichtung (14) angeschlossen ist, wobei das Reduktionsmittelspeichersystem (2) weiter eine Wärmevorrichtung (30) für Reduktionsmittel (10) aufweist, wobei die Zuführvorrichtung (16) ausgebildet ist zum Zuführen von Reduktionsmittel (10) aus dem Reduktionsmitteltank (6) zu der Rückführvorrichtung (14) durch eine zwischen diesen angeordnete Versorgungsvorrichtung (20) für Reduktionsmittel (10), indem die Venturi-Pumpe (18) Reduktionsmittel (10) von dem Reduktionsmitteltank (6) mittels des Rückflusses (B) des Reduktionsmittels (10) zapft, welcher durch die Rückführvorrichtung (14) zum Zapfbehälter (8) geleitet wird, und wobei die Wärmevorrichtung (30) ein Heizkreis (32) ist, in welchem ein flüssiges Wärmemedium (36) zirkuliert, das durch den Motor (34) des Fahrzeugs (4) erwärmt wird, wobei der Heizkreis (32) ausgebildet ist zum Betreiben innerhalb des unteren Bereichs (7) des Reduktionsmitteltanks (6), und **dadurch gekennzeichnet ist, dass** der Heizkreis (32) ausgebildet ist zum Betreiben innerhalb des unteren Bereichs (9) des Zapfbehälters (8) und auch thermisch mit der Venturi-Pumpe (18) verbunden ist, was es ermöglicht, Wärme von dem flüssigen Wärmemedium (36) an das Reduktionsmittel (10) in dem Reduktionsmitteltank (6), dem Zapfbehälter (8) und der Venturi-Pumpe (18) zu übertragen, um ein Gefrieren des Reduktionsmittels (10) zu verhindern und dass der Heizkreis (32) für das flüssige Wärmemedium (36) weiter mit Teilen der Zapfvorrichtung (12), der Rückführvorrichtung (14) und der Versorgungsvorrichtung (20) für Reduktionsmittel (10) thermisch verbunden ist, was es ermöglicht, Wärme von dem flüssigen Wärmemedium (36) an das Reduktionsmittel (10) in diesen Teilen zu übertragen, um ein Gefrieren des Reduktionsmittels (10) zu verhindern.

2. Reduktionsmittelspeichersystem (2) nach Anspruch 1, **dadurch gekennzeichnet, dass** der Heizkreis (32) für das flüssige Wärmemedium (36) mit mehr als einer Seite der Venturi-Pumpe (18) thermisch verbunden ist.

3. Reduktionsmittelspeichersystem (2) nach jedem der vorangehenden Ansprüche, **dadurch gekennzeichnet, dass** das flüssige Wärmemedium (36) entweder direkt durch den Motor (34) erwärmt wird, indem es das Kühlwasser für den Motor ist, oder indirekt durch den Motor (34) selbst erwärmt wird, indem es durch den Motor (34) erwärmt wird.

4. Reduktionsmittelspeichersystem (2) nach jedem der vorangehenden Ansprüche, **dadurch gekennzeichnet, dass** die Venturi-Pumpe (18) in einer Abdeckung (46) für den Reduktionsmitteltank (6) angeordnet ist.

5. Reduktionsmittelspeichersystem (2) nach jedem der vorangehenden Ansprüche, **dadurch gekennzeichnet, dass** die Durchbrüche in dem Reduktionsmitteltank (6) der Zapfvorrichtung (12), der Rückführvorrichtung (14), der Versorgungsvorrichtung (20) und des Heizkreises (32) in einem oder mehrerer Abdeckungen (46, 48) auf dem Reduktionsmitteltank (6) angeordnet sind, die dieser aufweist.

6. Reduktionsmittelspeichersystem (2) nach jedem der vorangehenden Ansprüche, **dadurch gekennzeichnet, dass** die Zapfvorrichtung (12), die Rückführvorrichtung (14) und die Versorgungsvorrichtung (20) für Reduktionsmittel (10) in der Form von Rohren oder Schläuchen vorliegen.

7. Reduktionsmittelspeichersystem (2) nach jedem der vorangehenden Ansprüche, **dadurch gekennzeichnet, dass** die Zapfvorrichtung (8) einen flüssigkeitsdichten Boden (22), eine den Boden (22) erweiternde flüssigkeitsdichte Seitenwandoberfläche (26) und mindestens eine Grenzwertvorrichtung (28) für Reduktionsmittel (10) aufweist, wobei der Zapfbehälter (8) bis zu der Grenzwertvorrichtung (28) aufgefüllt werden kann, aber jedes weiter zugeführte Reduktionsmittel (10) durch die Grenzwertvorrichtung (28) in den Reduktionsmitteltank (6) abläuft, in welchem der Zapfbehälter (8) angeordnet ist.

8. Reduktionsmittelspeichersystem (2) nach jedem der vorangehenden Ansprüche, **dadurch gekennzeichnet, dass** das Reduktionsmittel (10) eine Harnstofflösung ist.

## Revendications

1. Système de stockage d'agent réducteur (2) pour un véhicule (4), comprenant un réservoir d'agent réducteur (6), un récipient de soutirage (8) de l'agent réducteur situé dans le réservoir d'agent réducteur (6), un dispositif de soutirage (12) de l'agent réducteur (10), relié au récipient de soutirage (8), un dispositif de retour (14) de l'agent réducteur (10), relié au récipient de soutirage (8), et un dispositif d'alimentation (16) en agent réducteur (10) qui comprend une pompe à Venturi (18) reliée au dispositif de retour (14), lequel système de stockage d'agent réducteur (2) comprend, en outre, un dispositif de réchauffage (30) de l'agent réducteur (10), le dispositif d'alimentation (16) étant conçu pour alimenter en agent réducteur (10) le dispositif de retour (14), depuis le réservoir d'agent réducteur (6), par l'intermédiaire d'un dispositif d'approvisionnement (20) en l'agent réducteur (10) situé entre ceux-ci par la pompe à Venturi (18) qui aspire l'agent réducteur (10) du réservoir d'agent réducteur (6) au moyen du flux de retour (B) d'agent réducteur (10) qui est envoyé via le dispositif de retour (14) au récipient de soutirage (8), et le dispositif de réchauffage (30) étant une boucle de chauffage (32) dans laquelle circule un milieu caloporteur liquide (36) réchauffé par le moteur (34) du véhicule (4), laquelle boucle de chauffage (32) est adaptée pour fonctionner dans la partie inférieure (7) du réservoir d'agent réducteur (6), **caractérisé en ce que** la boucle de chauffage (32) est conçue pour fonctionner dans la partie inférieure (9) du récipient de soutirage (8) et est également associée thermiquement à la pompe à Venturi (18), permettant le transfert de chaleur du milieu caloporteur liquide (36) à l'agent réducteur (10) contenu dans le réservoir d'agent réducteur (6), le récipient de soutirage (8) et la pompe à Venturi (18), pour éviter la congélation de l'agent réducteur (10), et **en ce que** la boucle de chauffage (32) du milieu caloporteur liquide (36) est, en outre, associée thermiquement à des éléments du dispositif de soutirage (12), du dispositif de retour (14) et du dispositif d'approvisionnement (20) en agent réducteur (10), permettant le transfert de chaleur du milieu caloporteur liquide (36) à l'agent réducteur (10) dans lesdits éléments afin d'éviter la congélation de l'agent réducteur (10).

2. Système de stockage d'agent réducteur (2) selon la revendication 1, **caractérisé en ce que** la boucle de chauffage (32) du milieu caloporteur liquide (36) est associée thermiquement à plus d'un côté de la pompe Venturi (18).

3. Système de stockage d'agent réducteur (2) selon l'une quelconque des revendications précédentes, **caractérisé en ce que** le milieu caloporteur liquide (36) est soit directement réchauffé par le moteur (34) en étant l'eau de refroidissement du moteur, soit indirectement réchauffé par le moteur (34) à travers celui-ci le milieu caloporteur liquide (36) étant réchauffé par le moteur (34).

4. Système de stockage d'agent réducteur (2) selon l'une quelconque des revendications précédentes, **caractérisé en ce que** la pompe Venturi (18) est située dans un couvercle (46) du réservoir d'agent réducteur (6).

5. Système de stockage d'agent réducteur (2) selon l'une quelconque des revendications précédentes, **caractérisé en ce que** les pénétrations dans le réservoir d'agent réducteur (6) pour le dispositif de soutirage (12), le dispositif de retour (14), le dispositif d'approvisionnement (20) et la boucle de chauffage (32) sont situées dans un ou plusieurs couvercles (46, 48) prévus sur le réservoir d'agent réducteur (6).

6. Système de stockage d'agent réducteur (2) selon l'une quelconque des revendications précédentes, **caractérisé en ce que** le dispositif de soutirage (12), le dispositif de retour (14) et le dispositif d'approvisionnement (20) en l'agent réducteur (10) prennent la forme de tuyaux ou de tuyaux flexibles.

7. Système de stockage d'agent réducteur (2) selon l'une quelconque des revendications précédentes, **caractérisé en ce que** le récipient de soutirage (8) est pourvu d'un fond (22) étanche aux liquides, présente une surface de paroi latérale (26) étanche aux liquides s'étendant vers le haut à partir du fond (22) et est pourvu d'au moins un dispositif limiteur de niveau (28) de l'agent réducteur (10), le récipient de soutirage (8) pouvant être rempli jusqu'au dispositif limiteur de niveau (28) mais toute quantité supplémentaire d'agent réducteur (10) fournie s'écoulera via le dispositif limiteur de niveau (28) dans le réservoir d'agent réducteur (6) dans lequel est situé le récipient de soutirage (8).

8. Système de stockage d'agent réducteur (2) selon l'une quelconque des revendications précédentes, **caractérisé en ce que** l'agent réducteur (10) est une solution d'urée.
